# FASCICULE DE BREVET EUROPEEN

(11) **EP 1 658 909 B1**
(45) Date de publication et mention de la délivrance du brevet: **21.05.2008**
(21) Numéro de dépôt: 05292466.9
(22) Date de dépôt: 22.11.2005
(51) Int. Cl.: B21D 5/04, G01B 7/30

(54) **Système de mesure d'angle de pliage sur des machines panneauteuses**
Biegewinkelmesssystem auf Biegemaschinen
Folding angle measuring system on folding machines

(30) Priorité: 22.11.2004 ES 200402812
(43) Date de publication de la demande: 24.05.2006
(73) Titulaire: Goiti, S.Coop, 20870 Elgoibar, Guipuzcoa (ES)
(72) Inventeur: Aizpurua Zendoia, Inaki Xabier, 20820 Deba (Guipuzcoa) (ES)
(74) Mandataire: Intes, Didier Gérard André

(56) Documents cités:
- JP-A- 2001 321 833
- PATENT ABSTRACTS OF JAPAN vol. 2002, no. 03, 3 avril 2002 (2002-04-03) & JP 2001 321833 A (AMADA CO LTD), 20 novembre 2001 (2001-11-20)

## Description

La présente invention se rapporte au pliage de tôles pour la formation de panneaux au moyen de machines panneauteuses suivant le préambule de la revendication 1 en proposant un système de mesure de l'angle de pliage qui permet de contrôler tous les pliages de manière absolument précise.

### État de la technique

On connaît des machines qui réalisent automatiquement le pliage de tôles selon des angles prédéterminés, comprenant un poinçon et une matrice, entre lesquels est effectué le formage, ladite opération étant réalisée au moyen de pliages progressifs, afin de compenser la capacité de récupération des tôles qui sont pliées, laquelle varie en fonction de divers facteurs, tels que la nature du matériau, l'épaisseur, etc.

La précision du pliage dans ces circonstances requiert un contrôle précis de l'angle obtenu dans chaque pliage, raison pour laquelle on utilise des systèmes de mesure combinés, associés au procédé de pliage, par des mesures à l'aide de complexes dispositifs incorporés dans le propre système de pliage ou par des appareils indépendants.

Dans ce sens, on connaît des solutions telles que celle du brevet US 4 564 765, qui utilise un dispositif de mesure au laser, celle du brevet US 4 489 586, qui utilise un dispositif incorporé au poinçon de pliage, ou celle du brevet US 3 146 819, qui utilise un butoir palpeur d'appui de la tôle pliée.

Le brevet ES 2 209 594, du même titulaire que la présente invention, décrit une machine qui comprend un mécanisme plieur composé d'un porte-lames mobile et disposé face à un dispositif de saisie des tôles à plier, incorporant sur le porte-lames un palpeur se déplaçant vers le dispositif de saisie des tôles, afin de venir en contact avec celles-ci et de déterminer de ce fait l'angle de pliage de celles-ci.

Cette solution présente comme inconvénient le fait que, lors de la réalisation de pliages successifs, les propres pliages précédents des tôles constituent un obstacle à l'accès du palpeur jusqu'aux parties ultérieurement pliées, de sorte que ces pliages ultérieurs ne peuvent pas être contrôlés.

On connait également le document JP-A-2001-321833 décrivant un système selon le préambule de la revendication 1.

### But de l'invention

Selon l'invention, on propose une machine panneauteuse telle que définie dans la revendication 1, la machine panneauteuse permettant de contrôler avec précision tous les angles de pliages successifs réalisés dans le procédé habituel du pliage des tôles dans les machines panneauteuses.

Conformément au système de l'invention, de préférence sur la partie avant de chacune des lames du mécanisme plieur est disposé un capteur de mesure d'angle, composé d'une platine rigide disposée sur une autre platine flexible, et un groupe de jauges extensométriques incorporé sur la platine flexible.

De cette manière, on obtient un agencement qui permet à l'une quelconque des lames du mécanisme plieur de venir en contact avec la partie pliée de la tôle soumise au pliage, telle qu'elle fixée sur le dispositif de saisie, de sorte que le contact soit mis en oeuvre par la platine rigide du capteur correspondant, laquelle amène la platine flexible à fléchir, ledit fléchissement étant reflété par les jauges extensométriques, lesquelles génèrent un signal électrique qui est envoyé vers une commande CNC de la machine qui détermine, en fonction dudit signal, la position des lames, de sorte qu'en effectuant l'opération par rapport aux deux extrémités de la région pliée à contrôler, on obtient de manière exacte l'angle de ladite région.

En raison de la disposition des capteurs de mesure d'angle sur les lames du mécanisme plieur, au moyen desquelles s'effectuent les pliages des tôles d'application, il est possible d'accéder avec lesdits capteurs à n'importe quelle région pliée des tôles, sans rencontrer d'obstacles créés par des plis réalisés préalablement, de sorte que toutes les opérations de pliage successives des procédés de pliage des tôles peuvent être contrôlées avec précision.

De ce fait, le système de l'invention résulte de caractéristiques fonctionnelles assurément avantageuses, ce système s'appliquant de manière préférée, par nature, aux machines auxquelles celui-ci est destiné.

### Description des figures

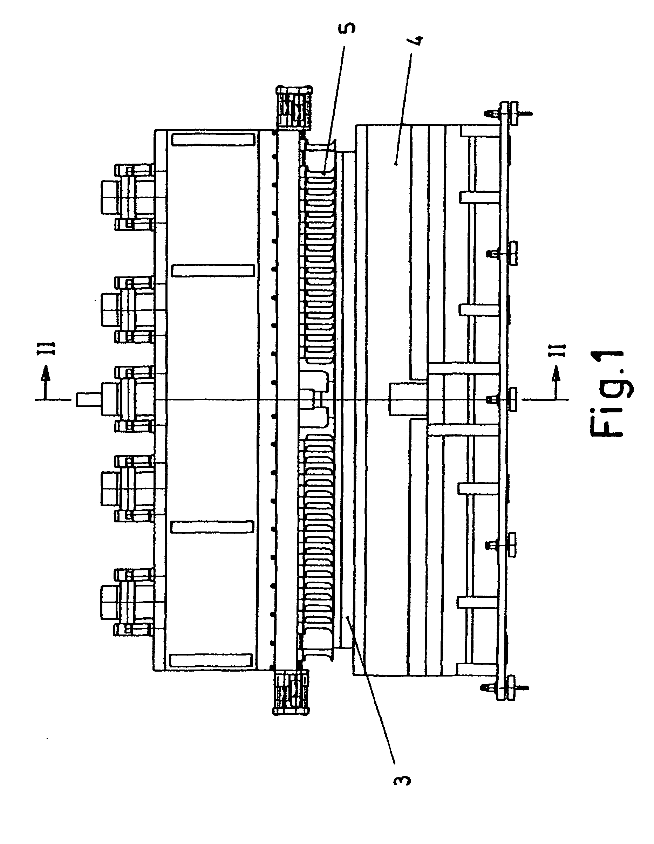

La figure 1 montre une vue en élévation frontale de la machine panneauteuse comprenant un système de mesure des angles.

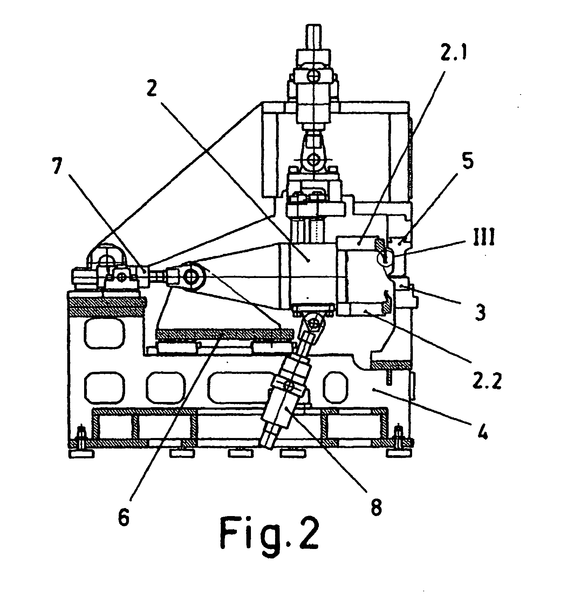

La figure 2 est une vue latérale en coupe de la machine précédente.
La figure 3 est un détail agrandi d'une lame de la machine panneauteuse et de l'agencement du système de mesure des angles.
Les figures 4 et 5 sont deux détails des positions de mesure d'un angle.
La figure 6 est un détail de l'opération de mesure d'un angle de pliage à l'aide du système de de mesure connu (ES 2 209 594), au moyen d'un palpeur déplaçable.

### Description détaillée de l'invention

L'invention a pour objet une machine panneauteuse comprenant un système de mesure des angles de pliage de tôles (1) selon la revendication 1, ledit système s'intégrant dans une machine qui comprend un mécanisme plieur composé d'un porte-lames (2) disposé en montage mobile face à un dispositif de saisie des tôles (1) à plier.

Le dispositif de saisie comprend une partie inférieure (3) fixée sur le bâti structurel (4) de la machine et un serre-flans supérieur (5) qui est susceptible d'être actionné verticalement en opposition à la partie inférieure (3) précédemment mentionnée, afin de serrer entre les deux les tôles (1) d'application fermement maintenues pour les opérations de pliage.

Le porte-lames (2) est disposé en articulation de basculement vertical sur des chariots porteurs (6), lesquels sont déplaçables sur des glissières en direction du dispositif de saisie des tôles (1).

Les chariots (6) sont liés à des vérins (7) respectifs aptes à entraîner en déplacement d'aller/retour lesdits chariots (6), tandis que le porte-lames (2) est lié à un ou plusieurs vérins (8) d'actionnement du basculement vertical dudit porte-lames (2) par rapport à l'articulation sur les chariots porteurs (6).

Le porte-lames (2) comprend une lame supérieure (2.1) et une lame inférieure (2.2) au moyen desquelles s'effectue le pliage des tôles (1), l'une ou l'autre agissant en fonction de la direction du pliage à réaliser dans chaque cas.

Pour la fonction opérative des pliages, la tôle (1) à plier est maintenue au moyen du dispositif de saisie entre le serre-flans (5) et la partie fixe (3) et, après ceci, la tôle (1) pressée est obligée à se plier par l'action du porte-lames (2) par actionnement des vérins (7 et 8).

L'actionnement des vérins (7 et 8) a lieu de manière automatique en fonction de l'angle programmé dans une commande CNC de la machine, le pliage s'effectuant en une première opération selon l'angle programmé, après quoi s'effectue une mesure de l'angle du pliage réalisé, pour corriger, si cela est nécessaire, au moyen d'une opération supplémentaire de pliage, tout défaut éventuel par rapport à l'angle programmé, par la récupération élastique du matériau de la tôle (1).

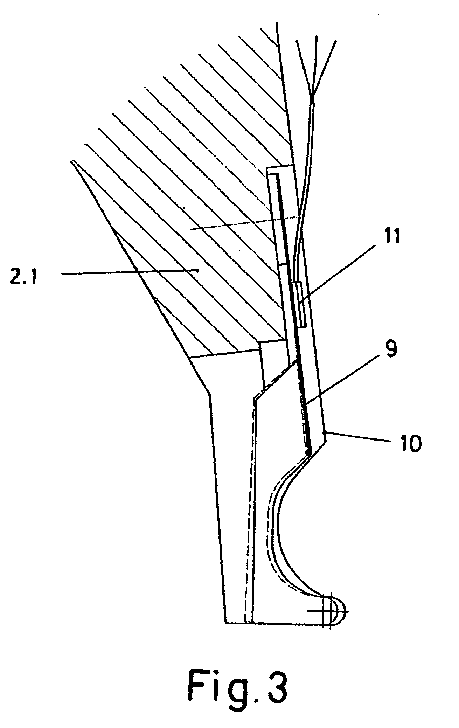

Pour la mesure des angles de pliage, conformément au système de l'invention, sur chacune des lames (2.1 et 2.2) du porte-lames (2) est incorporé un capteur de mesure d'angle, ledit capteur étant composé (voir figure 3) d'une platine flexible (9) qui est disposée sur la lame (2.1 ou 2.2) correspondante et d'une platine rigide (10) disposée sur la platine flexible (9), tandis que sur la platine flexible (9) est prévu, en outre, un groupe de jauges extensométriques (11).

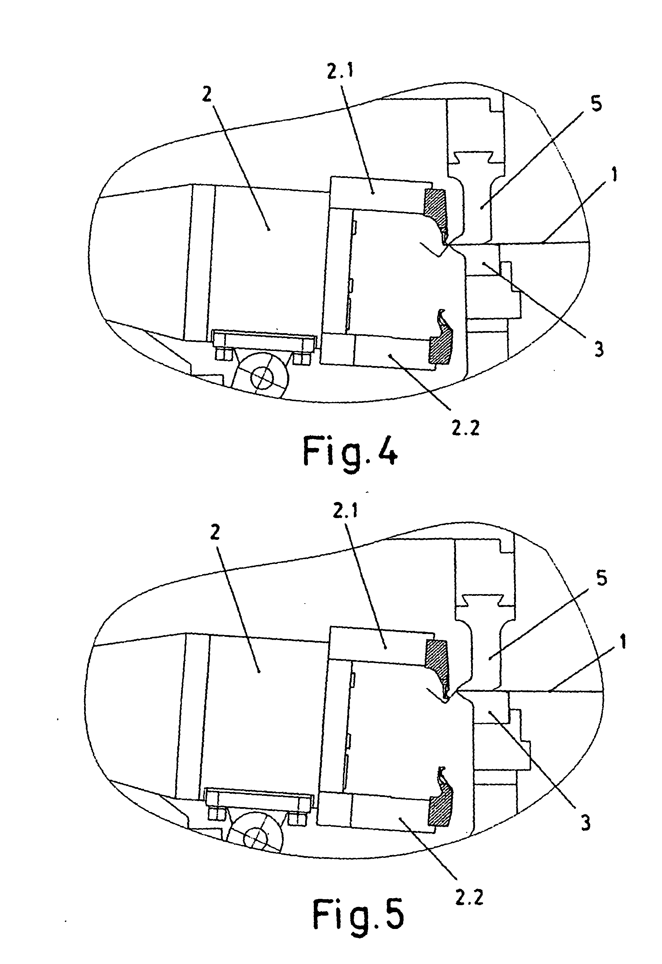

De cette manière, pour la mesure de l'angle de pliage d'une tôle (1) quelconque d'application, maintenue dans le dispositif de saisie, l'extrémité de la lame (2.1 ou 2.2) qui correspond est amenée à venir en contact avec l'une des parties d'extrémité du pliage de la tôle (1), tel que représenté sur la figure 4, avec pour effet que la platine rigide (10) du capteur de ladite lame vient en contact avec la tôle (1), ce qui provoque le fléchissement de la platine flexible (9), de sorte que, en fonction dudit fléchissement, les jauges extensométriques (11) génèrent un signal électrique, lequel est appliqué à la commande CNC de la machine qui détermine, en fonction de ce signal, la position des lames à cet instant.

En répétant par la suite l'opération de mise en contact avec la même lame (2.1 ou 2.2) sur l'autre région d'extrémité du pliage de la tôle (1), tel que représenté sur la figure 5, on détermine la position des lames dans cette seconde situation, avec pour effet que, par différence entre les deux positions traitées, la commande automatique de la machine calcule avec une grande précision l'angle du pliage mesuré.

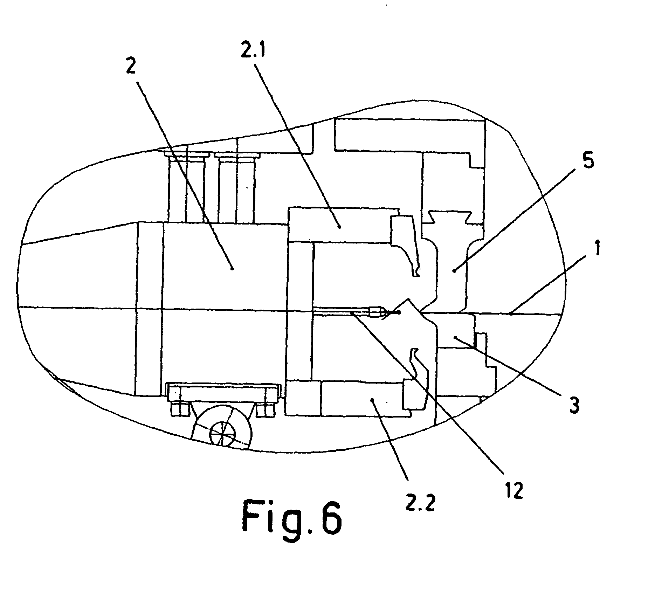

Dans ce cas, l'utilisation des lames (2.1 ou 2.2) elles-mêmes pour les opérations de mesure des angles, permet d'accéder jusqu'aux régions pliées de la tôle (1) sans aucun inconvénient dû aux pliages préalablement réalisés, comme c'est le cas avec le système de mesure connu, au moyen d'un palpeur (12) déplaçable, tel qu'il est représenté sur la figure 6.

## Revendications

1. Machine panneauteuse comprenant un système de mesure d'angle de pliage, du type comprenant un dispositif de saisie des tôles (1) à plier et un porte-lames mobile (2) par lequel sont effectués les pliages des tôles (1), dans lequel sur chacune des lames (2.1 et 2.2) que comprend le porte-lames (2) est incorporé un capteur de mesure d'angle, au moyen duquel sont déterminées des positions de contact de la lame correspondante (2.1 ou 2.2) sur les pliages des tôles (1) d'application, afin de calculer l'angle desdits pliages au moyen d'une commande numérique par calculateur (CNC), **caractérisé en ce que** le capteur incorporé sur chaque lame (2.1 ou 2.2) comprend une platine flexible (9) disposée sur la lame (2.1 ou 2.2) correspondante et une platine rigide (10) disposée sur la platine flexible (9), tel qu'il est prévu, en outre, sur ladite platine flexible (9) un groupe de jauges extensométriques (11) qui génèrent un signal électrique en fonction du fléchissement auquel est soumise ladite platine flexible (9), par poussée de la platine rigide (10), ce signal électrique étant envoyé vers ladite commande numérique par calculateur.

## Claims

1. A folding machine comprising a folding angle measuring system of the type comprising a device for grasping metal sheets (1) to be folded and a mobile blade-holder by which foldings of the metal sheets (1) are carried out, wherein on each of the blades (2.1 and 2.2) which the blade-holder (2) comprises, an angle measuring sensor is incorporated, by means of which contact positions of the corresponding blade (2.1 or 2.2) on the foldings of the application metal sheets (1) are determined, in order to compute the angle of said foldings by means of a computer numerical control (CNC), **characterized in that** the sensor incorporated on each blade (2.1 or 2.2) comprises a flexible plate (9) positioned on the corresponding blade (2.1 or 2.2), and a rigid plate (10) positioned on the flexible plate (9), such that on said flexible plate, a group of strain gauges (11) is further provided, which generate an electric signal depending on the bending to which said flexible plate (9) is subject, by the thrust of the rigid plate (10), this electric signal being sent to said computer numerical control.

## Patentansprüche

1. Plattenfügemaschine, die ein Biegewinkelmeßsystem des Typs aufweist, der eine Erfassungsvorrichtung (1) der zu faltenden Bleche und einen beweglichen Klingenträger (2) aufweist, durch den die Faltungen der Bleche (1) ausgeführt werden, bei der auf jeder der Klingen (2.1 und 2.2), die der Klingenträger (2) aufweist, ein Winkelmeßsensor eingebaut ist, mit welchem Berührungspositionen der entsprechenden Klinge (2.1 oder 2.2) auf den Faltungen der Anlegebleche (1) bestimmt werden, um den Winkel der Faltungen mittels einer numerischen Steuerung mit Rechner (CNC) zu berechnen, **dadurch gekennzeichnet, daß** der auf jeder Klinge (2.1 oder 2.2) eingebaute Sensor eine biegsame Platte (9) aufweist, die auf der entsprechenden Klinge 2.1 oder 2.2) angeordnet ist, und eine starre Platte (10), die auf der biegsamen Platte (9) angeordnet ist, wobei auf der biegsamen Platte (11) ferner eine Gruppe von Dehnungsmessern (11) vorgesehen ist, die ein elektrisches Signal in Abhängigkeit von dem Biegen, dem die biegsame Platte (9) durch Schieben der starren Platte (10) ausgesetzt ist, erzeugen, wobei dieses elektrische Signal zu der numerischen Steuerung mit Rechner gesendet wird.
